# EUROPÄISCHE PATENTANMELDUNG

(11) **EP 0 958 966 A2**
(43) Veröffentlichungstag der Anmeldung: **24.11.1999**
(21) Anmeldenummer: 99109718.9
(22) Anmeldetag: 18.05.1999
(51) Int. Cl.: B60R 16/02

(54) **Vorrichtung zur Ansteuerung elektrischer Verbraucher in einem Kraftfahrzeug**

(30) Priorität: 22.05.1998 DE 19823009
(71) Anmelder: Volkswagen Aktiengesellschaft, 38436 Wolfsburg (DE)
(72) Erfinder: Zander, André, 38820 Halberstadt (DE)

(57) **Zusammenfassung**

Die Erfindung betrifft eine Vorrichtung (1) zur Steuerung elektrischer Verbraucher (4) in einem Kraftfahrzeug, umfassend eine schaltbare Hauptstromverteilung (3), die mit einer Vielzahl elektrischer Verbraucher (4) verbunden ist, wobei die Hauptstromverteilung (3) in Abhängigkeit von der Verriegelung einer Zentralverriegelung (5) abschaltbar ist.

## Beschreibung

Die Erfindung betrifft eine Vorrichtung zur Steuerung elektrischer Verbraucher in einem Kraftfahrzeug zur Vermeidung der Entladung einer Fahrzeugbatterie gemäß dem Oberbegriff des Patentanspruchs 1.

Vergessene eingeschaltete elektrische Verbraucher wie beispielsweise die Beleuchtung stellen einen Kraftfahrzeugführer beim nächsten Startvorgang häufig vor das Problem, daß sich die Batterie derart stark entladen hat, daß die benötigte Starterspannung nicht zur Verfügung steht.

Aus der DE 27 05 574 ist eine Sicherheitsvorrichtung für Kraftfahrzeuge bekannt, bei der nach Abschalten der Zündung beim Verlassen des Fahrzeuges ein optisches und akustisches Warnsignal erzeugt wird, falls die Beleuchtung nicht abgeschaltet wurde. Des weiteren wird der Kraftfahrzeugführer bei schlechten Lichtverhältnissen ebenfalls akustisch und optisch gewarnt, Licht einzuschalten. Nachteilig an der bekannten Vorrichtung ist, daß deren Anwendbarkeit auf moderne Kraftfahrzeuge nur beschränkt möglich ist, die eine Vielzahl von elektrischen Verbrauchern aufweisen, da einerseits die Zuordenbarkeit und andererseits durch das häufige unnötige Warnen ein gewisser Gewöhnungseffekt einsetzt, so daß eine berechtigte Warnung ignoriert wird.

Aus der DE 40 42 451 ist eine elektrische Steuereinrichtung für ein Kraftfahrzeug zur Steuerung einer Vielzahl von elektrischen Verbrauchern mit Hilfe einer drahtlosen Kommunikation zwischen einer Sende-/Empfangseinheit, die am Fahrzeug angeordnet ist und einen Sender, der vom Fahrer getragen wird, bekannt, bei der eine schaltbare Hauptstromverteilung vorgesehen ist, die mit einer Vielzahl von elektrischen Verbrauchern einschließlich der Zündanlage verbunden ist. Zur Vermeidung des Problems der Batterieentladung aufgrund von eingeschalteten elektrischen Verbrauchern wird dort vorgeschlagen, daß die Sende- / Empfangseinheit ein vorbestimmtes Anforderungssignal aussendet und einen vorbestimmten Code empfängt, der Sender entsprechend das Anforderungsignal empfängt und den Code aussendet. Die Sende-/Empfangseinheit vergleicht den empfangenen Code mit dem vorbestimmten Code und schaltet bei Übereinstimmung die Hauptstromverteilung ein. Weiter ist eine Einrichtung zur Erfassung des Zündzustandes vorgesehen, die an die Zündanlage angeschlossen ist und die ein Ausgangssignal für die Sende- /Empfangseinheit liefert, zur Feststellung, daß der Motor gestoppt ist, während über die Hauptstromverteilung Energie geliefert wird, worauf die Sende- /Empfangseinheit das vorbestimmte Anforderungssignal zum Senden überträgt und die Hauptstromverteilung abschaltet, wenn die Sende-/ Empfangseinheit den vom Sender übertragenen Code in Erwiderung des vorbestimmten Anforderungssignals nicht innerhalb eines vorgegebenen Zeitraumes empfängt. Nachteilig an der bekannten Vorrichtung ist, daß durch diese Art der Abschaltung auch unerwünscht die elektrischen Verbraucher abgeschaltet werden, beispielsweise nach einem Unfall, wenn der Kraftfahrzeugführer das Kraftfahrzeug verläßt, um ein Warndreieck aufzustellen. Wird der vorgegebene Zeitraum zu klein gewählt, wird dann die eingeschaltete Warnblinkanlage abgeschaltet, was zu schweren Unfällen führen kann.

Aus der DE 92 16 671 U1 ist eine elektrische Bordausrüstung für Kraftfahrzeuge bekannt, bei der zum einfacheren Auffinden eines abgestellten Kraftfahrzeuges eine ferngesteuerte Zentralverriegelung mit der Kraftfahrzeugbeleuchtung derart gekoppelt wird, daß bei Empfang eines Entriegelungssignals für die Zentralverriegelung gleichzeitig die Fahrgastraumbeleuchtung eingeschaltet wird.

Der Erfindung liegt daher das technische Problem zugrunde, eine Vorrichtung zur Steuerung elektrischer Verbraucher in einem Kraftfahrzeug zu schaffen, mittels derer eine Entladung der Batterie aufgrund vergessener eingeschalteter elektrischer Verbraucher vermieden wird, ohne daß es zu unerwünschten Abschaltungen kommt.

Die Lösung des technischen Problems ergibt sich durch die Merkmale des Patentanspruchs 1. Durch die Abschaltung der Hauptstomverteilung bei Verriegelung der Zentralverriegelung ist sichergestellt, daß einerseits beim Verlassen des Kraftfahrzeuges und Betätigung der Zentralverriegelung sicher alle elektrischen Verbraucher von der Fahrzeugbatterie getrennt werden und andererseits ein kurzfristiges Verlassen des Kraftfahrzeuges, wie beispielsweise bei einem Unfall, um das Warndreieck aufzustellen, keinerlei Auswirkung auf die elektronischen Verbraucher hat. Weitere vorteilhafte Ausgestaltungen der Erfindung ergeben sich aus den Unteransprüchen.

Durch die Unterscheidung, ob die Verriegelung von innerhalb oder außerhalb des Fahrzeuges initiiert wurde, wobei nur bei einer Betätigung von außen die Hauptstromverteilung abgeschaltet wird, kann auch mit einer verriegelten Zentralverriegelung gefahren werden. Dies ist insbesondere deshalb wichtig, da aufgrund der zunehmenden Besorgnis vor Car-Napping immer mehr Kraftfahrzeugführer mit verriegelter Zentralverriegelung fahren möchten. Zum anderen würde ein versehentliches Betätigen der Zentralverriegelung während der Fahrt ansonsten zu gefährlichen Situationen führen, falls alle elektrischen Verbraucher plötzlich von der Batterie abgekoppelt würden. Zwar kann dies auch durch eine Erfassungseinrichtung gelöst werden, die zusätzlich den Zustand der Zündanlage erfaßt, jedoch wäre somit nicht sichergestellt, daß bei einem Warten innerhalb des Kraftfahrzeuges bei abgeschalteter Zündung noch elektrische Verbraucher ansteuerbar wären.

Des weiteren kann zusätzlich vorgesehen sein, daß die Zentralverriegelung Mittel aufweist, mittels derer ein Schloß bzw. ein Ort ermittelbar ist, von dem aus die Verriegelung vorgenommen wurde, wobei dann die Abschaltung der elektrischen Verbraucher davon abhängig vorgenommen werden kann. Beispielsweise kann dann bei der alleinigen Verriegelung der Heckklappe von einer Abschaltung abgesehen werden. Weiter können der Zentralverriegelung verschiedene Schließsequenzen zugeordnet sein, so daß durch die erfaßte Schließsequenz auf den Wunsch des Fahrers zurückgeschlossen werden kann, ob dieser sein Fahrzeug dauerhaft abstellen möchte und die elektrischen Verbraucher dementsprechend abgeschaltet werden sollen.

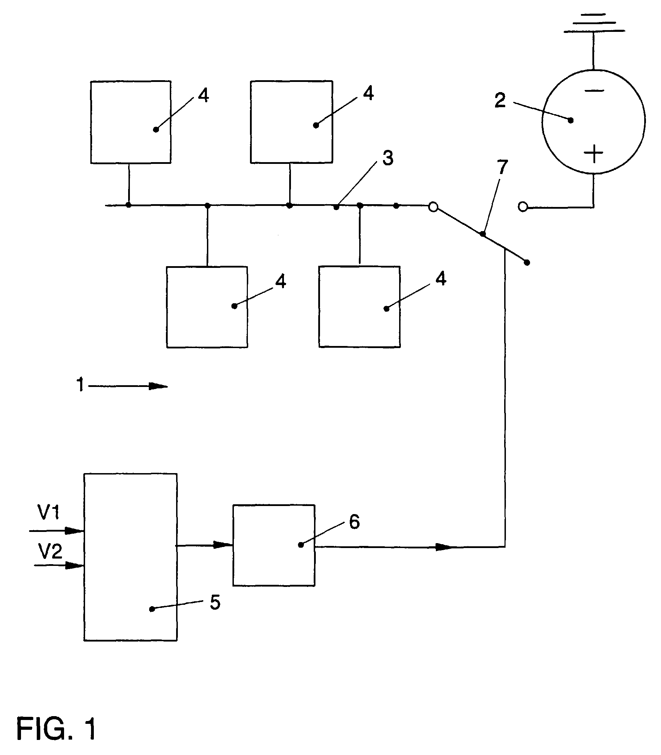

Die Erfindung wird nachfolgend anhand eines bevorzugten Ausführungsbeispiels näher erläutert. Die einzige Figur zeigt ein schematisches Blockschaltbild einer Vorrichtung elektrischer Verbraucher in einem Kraftfahrzeug.

Die Vorrichtung 1 zur Steuerung elektrischer Verbraucher in einem Kraftfahrzeug zur Vermeidung der Entladung einer Fahrzeugbatterie 2 umfaßt eine Hauptstromversorgung 3, an die eine Vielzahl elektrischer Verbraucher 4 angeschlossen ist. Die Vorrichtung 1 umfaßt weiter eine Zentralverriegelung 5, eine Steuereinheit 6 und einen Schalter 7. Der Schalter 7 ist zwischen der Fahrzeugbatterie 2 und dem Hauptverteiler 3 angeordnet und wird von der Steuereinheit 6 geschaltet, die Betätigungssignale der Zentralverriegelung 5 auswertet und gegebenenfalls die mechanischen Signale der Zentralverriegelung 5 in elektrische Stellsignale wandelt. Die Zentralverriegelung 5 kann über ein Betätigungssignal V1 von außen oder über ein Betätigungssignal V2 von innen gesteuert werden. Dabei erfolgt die Betätigung von außen meist über den mechanischen Schlüssel und von innen über einen Druckschalter. Alternativ oder kumulativ zu den beschriebenen Betätigungsmechanismen kann die Zentraleinheit 5 mittels eines transportablen Transponders geschaltet werden. Die Betätigungssignale V1 und V2 können dabei auf verschiedene oder einen gemeinsamen Eingang der Zentralverriegelung 5 arbeiten, es muß jedoch sichergestellt sein, daß die Zentralverriegelung 5 identifizieren kann, ob es sich um ein Signal V1 oder V2 handelt.

Wird nun von außen durch einen Transponder oder einen mechanischen Schlüssel die Zentralverriegelung 5 angesprochen, um das Kraftfahrzeug zu verriegeln, so erhält die Zentralverriegelung 5 ein Betätigungssigal V1. Dieses Betätigungssignal V1 kann dabei elektrische, akustisch, optisch oder mechanischer Natur sein. Die Zentralverriegelung 5 verriegelt daraufhin das Kraftfahrzeug und gibt gleichzeitig ein Signal an die Steuereinheit 6 ab, daß ein Betätigungssignal V1 empfangen wurde. Die Steuereinheit 6 erzeugt darauf ein Schaltsignal, mittels dessen der Schalter 7 geöffnet und dadurch die Fahrzeugbatterie 2 vom Hauptstromverteiler 3 getrennt wird. Erhält die Zentralverriegelung 5 hingegen ein Betätigungssignal V2 von innerhalb des Kraftfahrzeuges, so wird nur verriegelt, wohingegen die Steuereinheit 6 kein Schaltsignal erzeugt. Die Zuschaltung der Fahrzeugbatterie 2 kann entsprechend ebenfalls über ein Entriegelungssignal der Zentralverriegelung 5 erfolgen oder aber über das Zündschloß.

## Patentansprüche

1. Vorrichtung zur Steuerung elektrischer Verbraucher in einem Kraftfahrzeug, umfassend eine schaltbare Hauptstromverteilung, die mit einer Vielzahl elektrischer Verbraucher verbunden ist, **dadurch gekennzeichnet**, daß die Hauptstromverteilung (3) in Abhängigkeit von der Verriegelung einer Zentralverriegelung (5) abschaltbar ist.

2. Vorrichtung nach Anspruch 1, **dadurch gekennzeichnet**, daß die Zentralverriegelung (5) von inner- und außerhalb des Kraftfahrzeuges betätigbar ist, die Zentralverriegelung (5) Mittel aufweist, mittels derer der Ort der Betätigung der Verriegelung erfaßbar ist und die Hauptstromverteilung (3) nur bei einer Verriegelung von außen abschaltbar ist.

3. Vorrichtung nach Anspruch 1 oder 2, **dadurch gekennzeichnet**, daß die Hauptstromverteilung (3) durch Entriegelung der Zentralverriegelung (5) anschaltbar ist.

4. Vorrichtung nach einem der Ansprüche 1 bis 3, **dadurch gekennzeichnet**, daß der Hauptstromverteilung (3) ein Relais zugeordnet ist, mittels dessen eine Fahrzeugbatterie (2) galvanisch zu- oder abschaltbar ist.

5. Vorrichtung nach einem der Ansprüche 1 bis 3, **dadurch gekennzeichnet**, daß der Hauptstromverteilung (3) mindestens ein elektronischer Schalter (7) zugeordnet ist, mittels dessen der Stromfluß zwischen Fahrzeugbatterie (2) und elektrischem Verbraucher (4) schaltbar ist.

6. Vorrichtung nach einem der vorangegangenen Ansprüche, dadurch gekennzeichnet, daß die Zentralverriegelung (5) Mittel aufweist, mittels derer ein Schloß oder ein Ort erfaßbar ist, von dem die Zentralverriegelung betätigt wird.

7. Vorrichtung nach einem der vorangegangenen Ansprüche, dadurch gekennzeichnet, daß der Vorrichtung verschiedene Schließsequenzen zugeordnet sind und bei Erfassung einer vorbestimmten Schließsequenz die Hauptstromverteilung abschaltbar ist.
